# FASCICULE DE BREVET EUROPEEN

(11) **EP 2 361 383 B1**
(45) Date de publication et mention de la délivrance du brevet: **30.05.2018**
(21) Numéro de dépôt: 09803865.6
(22) Date de dépôt: 15.12.2009
(51) Int. Cl.: G01N 29/22, B01L 3/00

(54) **DISPOSITIF ET PROCEDE POUR ETUDIER UNE ZONE D'ETUDE PAR ONDE ACOUSTIQUE**
VORRICHTUNG UND VERFAHREN ZUR UNTERSUCHUNG EINES STUDIENGEBIETES MITTELS SCHALLWELLE
DEVICE AND METHOD FOR STUDYING A STUDY AREA BY MEANS OF AN ACOUSTIC WAVE

(30) Priorité: 22.12.2008 FR 0807357
(43) Date de publication de la demande: 31.08.2011
(73) Titulaire: Centre National de la Recherche Scientifique (C.N.R.S.), 75794 Paris Cedex 16 (FR)
(72) Inventeur: NONGAILLARD, Bertrand, F-59135 Wallers (FR); CAMPISTRON, Pierre, F-59370 Mons En Baroeul (FR); CARLIER, Julien, F-59310 Sameon (FR); DEBAVELAERE-CALLENS, Dorothée, F-59310 Sameon (FR); NASSAR, Georges, F-59590 Raismes (FR); LEFEBVRE, Fabrice, F-59269 Artres (FR)
(74) Mandataire: Domenego, Bertrand
(86) Numéro de dépôt international: PCT/FR2009/052546
(87) Numéro de publication internationale: WO 2010/072944

(56) Documents cités:
- EP-A1- 1 878 483
- FR-A1- 2 791 137
- FR-A1- 2 882 205
- US-A- 5 853 994
- US-A- 6 082 181
- US-A1- 2003 029 242

## Description

### Domaine technique

La présente invention concerne un dispositif et un procédé pour étudier une zone d'étude par onde acoustique

Le domaine de l'invention est plus particulièrement mais de manière non limitative celui des bioMEMS (bio-MicroElectroMechanicalSystem) et laboratoires sur puce ou celui de l'intégration de composants acoustiques sur wafer, des composants électroniques et microfluidiques, des interactions acousto-optiques guidées et localisées et de l'étude de réseaux phoniques à des échelles de longueur d'onde de l'ordre du micron.

L'invention réponds en particulier à une demande croissante des biologistes afin de disposer de capteurs intégrés fournissant des informations dynamiques sur des propriétés mécaniques de cellules biologiques.

### Etat de la technique antérieure

Habituellement, la réalisation de composants acoustiques sur wafer ou substrat mince nécessite de déposer au moins une source d'émission de faisceau acoustique sur une première face d'un substrat mince, ce qui entraîne une contrainte sur la direction de propagation des ondes de volumes engendrées.

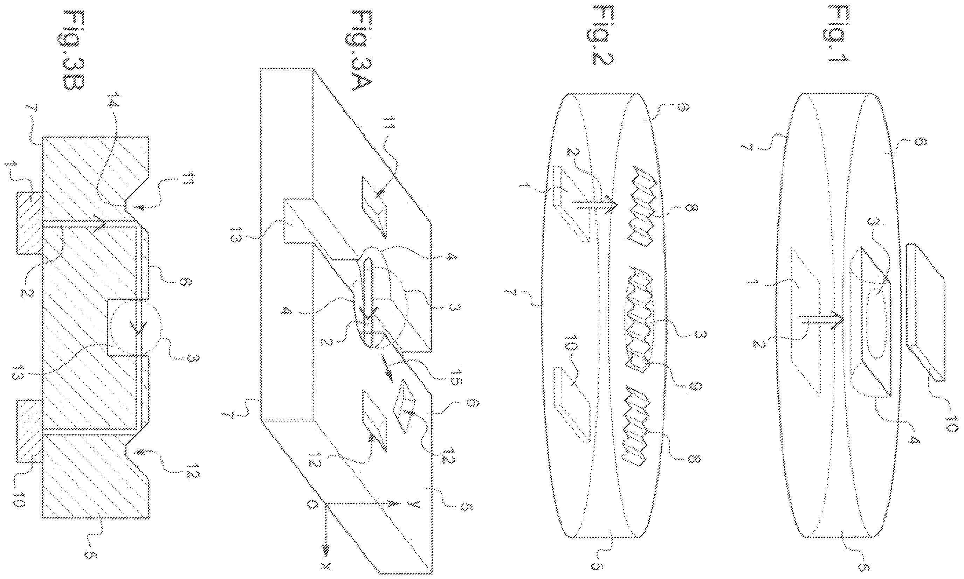

Une première solution de l'état de la technique antérieure illustrée sur la figure 1 consiste à étudier une zone d'étude située dans ledit substrat grâce au faisceau acoustique émis par la source d'émission située sur la première face dudit substrat. Un récepteur est alors situé sur une deuxième face du même substrat, généralement formé en lamelle, les première et deuxième faces étant sensiblement opposées et parallèles. Une telle solution technique implique que la première et la deuxième face sont encombrées, l'une par la source d'émission, l'autre par le récepteur. La source d'émission, le récepteur et la zone d'étude sont alignés.

Or, il est souvent utile d'effectuer en plus de la mesure par le faisceau acoustique, un autre type de mesure sur la zone d'étude. Cet autre type de mesure, par exemple via une observation de la zone d'étude, nécessite que la première ou la deuxième face, de préférence la deuxième face, soient libres de façon à pouvoir disposer au-dessus de la zone d'étude un second dispositif d'observation tel qu'un microscope optique visant la deuxième face.

Une seconde solution selon l'art antérieur illustré sur la figure 2, permettant de laisser libre la deuxième face, consiste alors à disposer sur la deuxième face, de part et d'autre de la zone d'étude, des peignes ou des réseaux de traits à profil par exemple triangulaires ou rectangulaires et de périodicité égale à la longueur d'onde d'une onde de surface créée. En atteignant la deuxième face du substrat, l'onde acoustique émise par la source d'émission se transforme en une onde acoustique de surface. Ainsi, une onde de surface se propage sur la deuxième face du substrat, en traversant la zone d'étude. Cependant, une telle solution est à la fois réservée à des classes de matériaux coûteux et incompatibles avec certaines applications telles que la biologie, en particulier dans le cas où le substrat comprend du niobate de lithium (LiNbO₃) ou de l'oxyde de Zinc (ZnO). Cette solution est de plus sélective en fréquence, et ne permet pas de disposer d'un volume d'interaction important, puisque limité à une longueur d'onde en épaisseur sous la surface du substrat.

Le but de la présente invention est de proposer un dispositif ou un procédé pour étudier une zone d'étude par onde acoustique, qui ne présente pas les inconvénients des solutions de l'état de la technique exposées ci-dessus.

### Exposé de l'invention

### L'invention concerne :

Un dispositif pour étudier une zone d'étude (3) par onde acoustique, comprenant :
- un substrat (5) muni d'une première face (7) et d'une deuxième face (6) distinctes,
- une zone d'étude (3),
- une source d'émission (1) agencée pour émettre un faisceau acoustique provenant de la première face (7) en direction de la deuxième face (6),
- des premiers moyens de réflexion (11) dudit faisceau acoustique
- un récepteur (10)
caractérisé en ce que,
- la zone d'étude (3) est incluse dans le substrat (5).
- les premiers moyens de réflexion (11) dudit faisceau acoustique sont agencés pour réfléchir ledit faisceau provenant de la première face, de sorte que le faisceau possède, après réflexion, une direction de propagation sensiblement parallèle à la deuxième face (6) et traverse la zone d'étude (3), et en ce que le dispositif comporte en outre
- des seconds moyens de réflexion (12) agencés pour réfléchir le faisceau acoustique en direction de la première face (7) après que le faisceau ait traversé la zone d'étude (3), et en ce que
- le récepteur (10) est agencé pour recevoir ledit faisceau acoustique réfléchi par les seconds moyens de réflexion (12),

L'invention permet de disposer d'un faisceau acoustique de direction de propagation sensiblement parallèle à la deuxième face du substrat, et donc de libérer la deuxième face par exemple pour permettre de regrouper facilement plusieurs capteurs, et donc plusieurs fonctions sur un même circuit. En effet, la deuxième face est laissée libre ce qui permet d'agencer sur celle-ci un second dispositif par exemple d'observation et/ou de mesure, par exemple un microscope optique permettant de visualiser la zone d'étude.

En outre, on peut graver la première ou la deuxième surface pour y réaliser des éléments de focalisation (telle une lentille), de divergence (telle une lentille) ou de réflexion (tel un miroir) du faisceau acoustique, ces éléments ayant une forme invariante le long d'un axe d'invariance perpendiculaire à la première ou à la deuxième surface, ce qui facilite considérablement leur réalisation par des procédés de lithographie classiques.

Dans un mode de réalisation privilégié, la source d'émission est située sur la première face dudit substrat. Au contraire, dans un autre mode de réalisation, il peut exister une couche intermédiaire entre la source d'émission et la première face du substrat.

De même, dans un mode de réalisation privilégié, le récepteur est de préférence situé sur la première face dudit substrat. Au contraire, dans un autre mode de réalisation, il peut exister une couche intermédiaire entre le récepteur et la première face du substrat.

Après réflexion par les seconds moyens de réflexion, le faisceau acoustique dont la direction de propagation est parallèle à la deuxième face peut être plus proche de la première face que de la deuxième face, ou peut être plus proche de la deuxième face que de la première face.

De préférence, la première et la deuxième face sont opposées, le substrat étant par exemple de forme parallélépipédique ou ayant par exemple la forme d'un disque.

Dans un mode de réalisation privilégié, la première et la deuxième face sont sensiblement parallèles. De préférence, le substrat se présente sous la forme d'une lame dont par exemple deux faces opposées présentant les plus grandes surfaces constituent lesdites première et deuxième faces.

Les premiers et/ou seconds moyens de réflexion du dispositif selon l'invention comprennent de préférence un miroir formé par une interface de matières, de préférence par une interface avec le substrat, de préférence une interface air/substrat. Ainsi, une simple différence d'indice entre deux matériaux au niveau d'un miroir incliné créée une déviation du faisceau acoustique émis par la source d'émission vers les premiers moyens de réflexion. Cette différence d'indice est par exemple la différence entre l'indice du substrat et l'indice de l'air, dans le cas où le substrat est plongé dans l'air, mais peut aussi par exemple être la différence entre l'indice du substrat et l'indice d'un liquide dans lequel ledit substrat est immergé. Le dispositif selon l'invention peut comprendre en outre au moins une couche complémentaire de matériau ou un ensemble de plusieurs couches complémentaires de différents matériaux superposées, cette couche ou ces couches étant disposée(s) sur le substrat, de sorte que les premiers et/ou les seconds moyens de réflexion comprennent un miroir formé par une interface de matières entre le substrat et cette couche complémentaire ou cet ensemble de plusieurs couches complémentaires. Chaque couche complémentaire est de préférence sélectionnée parmi : une couche de métal comme de préférence du cuivre, du zinc, de l'étain, du titane, ou une couche de matériau diélectrique, comprenant de préférence du silicium, de préférence un oxyde de silicium tel du monoxyde de silicium SiO ou de la silice SiO₂. L'épaisseur de chaque couche complémentaire est comprise de préférence entre 0,1 micromètre et 10 micromètres, de manière plus préférentielle entre 0,5 micromètres et 5 micromètres.

Le substrat est par exemple à base de silicium. Il peut s'agir de silicium pur, ou d'un alliage ou mélange comprenant notamment du silicium. Le substrat peut aussi comprendre de façon non limitative du métal, du verre, ou un polymère solidifié tel que du polydiméthylsiloxane (PDMS),

Selon un mode de réalisation privilégié, les premiers et/ou seconds moyens de réflexion du dispositif selon l'invention comprennent un creux formé sur la deuxième face du substrat. Chaque creux est de préférence gravé dans la deuxième face du substrat, et forme de préférence une interface par rapport à la deuxième face, interface qui joue le rôle de miroir incliné. Ainsi, la déviation du faisceau acoustique est créée non seulement par une différence d'indice, mais aussi par l'état de surface du substrat, par exemple son inclinaison locale par rapport au faisceau acoustique.

De façon privilégiée, les premiers et/ou seconds moyens de réflexion comprennent un miroir incliné à 45° par rapport à la deuxième face. On entend par miroir, par exemple une interface entre deux matériaux d'indices différents. Cette interface est de préférence inclinée à 45°, de façon à dévier le faisceau acoustique typiquement d'un angle de 90°, ou plus généralement d'un angle égal à deux fois l'angle aigu entre le faisceau acoustique et la normale au miroir. Il est important de noter que l'on parle de réflexion et non pas d'une transformation d'un onde incidente en onde de surface. En ce sens, le dispositif selon l'invention se distingue de la seconde solution selon l'art antérieur, dans lequel l'onde se propageant dans une direction sensiblement parallèle à la deuxième face n'est qu'une onde de surface.

De préférence, la source d'émission et/ou le récepteur comprennent des transducteurs piézoélectriques. La piézoélectricité est la propriété que possèdent certains corps de se polariser électriquement sous l'action d'une contrainte mécanique et réciproquement de se déformer lorsqu'on leur applique un champ électrique. Ainsi, l'onde acoustique étant liée à la notion de contrainte ou de vibration mécanique, un transducteur piézoélectrique fait office de source d'émission d'onde acoustique, en convertissant une tension électrique en contrainte mécanique, et de récepteur en convertissant une contrainte mécanique en tension électrique.

Selon un mode de réalisation privilégié, la zone d'étude comprend une partie d'un canal microfluidique situé de préférence sur la deuxième face. On peut ainsi caractériser de façon non destructive et dynamique les propriétés mécaniques d'une cellule biologique traversant ce canal microfluidique et atteinte par le faisceau acoustique.

Selon un mode de réalisation privilégié, le dispositif comprend au moins une lentille de forme ou de courbure donnée par exemple cylindrique ou parabolique, chaque lentille étant agencée pour être traversée par le faisceau acoustique. De préférence, la forme ou courbure de l'au moins une lentille ne varie pas le long d'un axe sensiblement perpendiculaire à la deuxième face, cet axe étant par la suite appelé axe d'invariance. Dans un mode de réalisation, le dispositif selon l'invention peut comprendre deux lentilles, une première lentille étant située sur le parcours du faisceau acoustique entre les premiers moyens de réflexion et la zone d'étude, une deuxième lentille étant située sur le parcours du faisceau acoustique entre la zone d'étude et les seconds moyens de réflexion. Dans une variante, le dispositif selon l'invention ne peut comprendre qu'une seule de ces deux lentilles. Dans un autre mode de réalisation, le dispositif selon l'invention peut comprendre une lentille creuse, la zone d'étude étant située au milieu de la lentille creuse. De préférence, l'au moins une lentille a une forme de portion de cylindre dont l'axe de révolution est sensiblement perpendiculaire à la deuxième face. Une telle géométrie a des avantages en terme de facilité de fabrication, notamment par des procédés de lithographie. En effet, dans ce cas, si l'on compare le dispositif selon l'invention, à la première solution selon l'art antérieur, la direction de l'axe d'invariance de la lentille dans le dispositif selon l'invention présente l'avantage d'être adaptée au plan de résolution maximal des dispositifs de gravure, à savoir les plans parallèles à la surface du substrat. Ici, il s'agit des plans parallèles à la deuxième face du substrat. Selon l'invention, On voit que le rayon de courbure de l'au moins une lentille peut alors être gravé avec précision, tandis que selon l'art antérieur, une lentille cylindrique serait d'axe parallèle à la deuxième face du substrat et le rayon de courbure de cette lentille cylindrique serait alors gravé pas à pas, en faisant varier peu à peu les hauteurs de gravure dans le substrat. La gravure se fait alors avec moins de précision.

L'agencement de la deuxième face selon l'invention permet également, pour la même raison, de graver simplement et avec précision des éléments de type pilier, membrane, dans le canal microfluidique de façon par exemple à occulter une partie du faisceau acoustique incident ou transmis, ou à exciter un des modes de vibration de ces éléments par pression de radiation.

L'au moins une lentille est de préférence directement formée dans le substrat, de façon à maintenir une continuité de matière depuis la source d'émission jusqu'à la zone d'étude en particulier pour limiter les pertes d'énergie. Une lentille dont la forme ou courbure ne varie pas le long d'un axe sensiblement perpendiculaire à la deuxième face est avantageuse car elle permet à la fois de concentrer l'énergie sur une surface réduite ce qui augmente la résolution sur les mesures dans la zone d'étude, mais elle permet aussi de balayer la zone d'étude à l'aide d'un faisceau acoustique focalisé sur un segment, ce qui augmente la probabilité de détecter par exemple une molécule ou une cellule traversant le canal microfluidique par rapport au cas d'une focalisation selon un point. Il est néanmoins envisageable d'utiliser une lentille sphérique, qui focalise alors le faisceau acoustique sensiblement selon un point, mais dont la gravure serait plus compliquée.

Dans le cas où la zone d'étude est une partie d'un canal microfluidique, l'au moins une lentille est de préférence formée dans une paroi du canal microfluidique. Ainsi, on réalise un dispositif particulièrement compact puisque l'on creuse simplement en forme de portion de cylindre, au moins une paroi du canal microfluidique située en face de la zone d'étude.

Selon un certain mode de réalisation, les premiers moyens de réflexion sont distincts des seconds moyens de réflexion, et de préférence la source d'émission est distincte du récepteur. Dans ce mode de réalisation, le faisceau acoustique est émis par la source d'émission, réfléchi par les premiers moyens de réflexion, traverse la zone d'étude dans le substrat, est réfléchi ensuite par les seconds moyens de réflexion vers le récepteur. On dit dans ce cas que l'on travaille en transmission, car on étudie la zone d'étude en fonction d'un faisceau qui est transmis à l'intérieur de cette zone.

Selon un autre mode de réalisation, les premiers et seconds moyens de réflexion sont confondus. On travaille dans ce cas en réflexion. Selon ce mode de réalisation, la source d'émission et le récepteur sont de préférence aussi confondus. Ainsi, la source d'émission émet le faisceau acoustique en direction des premiers moyens de réflexion, puis le faisceau acoustique est réfléchi par les premiers moyens de réflexion puis il pénètre à l'intérieur de la zone d'étude. Là, soit le dispositif comprend en outre des troisièmes moyens de réflexions agencés pour réfléchir le faisceau vers les seconds moyens de réflexion (confondus avec les premiers moyens de réflexion) après que le faisceau ait traversé au moins une partie de la zone d'étude, soit la zone d'étude est agencée pour réfléchir le faisceau vers les seconds moyens de réflexion. Dans ce second cas, le faisceau acoustique est par exemple réfléchi sur une cellule ou molécule ou autre élément traversant le canal microfluidique. Il faut noter qu'il est en outre possible de travailler en réflexion sans que les premiers et seconds moyens de réflexion soient confondus. Un simple décalage angulaire entre les axes optiques des premiers moyens de réflexion, troisièmes moyens de réflexion et seconds moyens de réflexion par exemple permet que les faisceaux incidents et réfléchis sur la zone d'étude ne soient pas alignés, et donc que les premiers et seconds moyens de réflexion ne soient pas confondus. Dans ce cas, la source d'émission et le récepteur ne sont pas non plus nécessairement confondus.

Dans un mode de réalisation privilégié, les seconds moyens de réflexion et le récepteur sont agencés pour recevoir un faisceau diffracté dans la zone d'étude. Le dispositif peut dans ce cas comprendre plusieurs ensembles comprenant chacun des seconds moyens de réflexion et un récepteur, un premier ensemble permettant d'étudier le faisceau acoustique en transmission, sensiblement dans l'alignement du faisceau incident dans la zone d'étude, au moins un autre ensemble permettant d'étudier la partie du faisceau acoustique diffractée par la zone d'étude. Le dispositif peut comprendre soit uniquement les seconds moyens de réflexion et le récepteur sensiblement dans l'alignement du faisceau incident dans la zone d'étude, soit uniquement les seconds moyens de réflexion et le récepteur sensiblement alignés avec le faisceau diffracté par la zone d'étude, soit plusieurs moyens de réflexion et plusieurs récepteurs pour étudier à la fois le faisceau transmis sensiblement sans décalage angulaire par rapport au faisceau incident dans la zone d'étude et au moins un ordre de diffraction dans la zone d'étude. L'étude à la fois du faisceau transmis et d'au moins un faisceau diffracté permet d'avoir des contrastes différents dans la zone d'étude, et de récupérer plus d'informations sur celle-ci. Un tel dispositif dans lequel les seconds moyens de réflexion sont par exemple inclinés par rapport à l'axe du canal microfluidique permet en outre de l'étude d'un faisceau diffracté dans la zone d'étude, l'étude d'autres types de faisceaux déviés dans la zone d'étude, par exemple l'étude d'un faisceau diffusé dans la zone d'étude.

Selon un autre mode de réalisation, le dispositif comprend plusieurs sources d'émission et plusieurs récepteurs, chaque récepteur étant associé à une des sources d'émission et étant agencé pour recevoir un faisceau acoustique : ledit faisceau étant émis en provenance de la première face et en direction de la deuxième face par la source d'émission à laquelle il est associé, puis réfléchi par les premiers moyens de réflexion de sorte que le faisceau possède après réflexion une direction de propagation sensiblement parallèle à la deuxième face et traverse la zone d'étude, puis réfléchi par les seconds moyens de réflexion en direction de la première face après avoir traversé la zone d'étude.

Selon un premier mode de réalisation associé, les sources d'émission sont alignées de sorte que différents faisceaux acoustiques émis par les différentes sources traversent la zone d'étude à différentes hauteurs. Chaque source d'émission permet l'étude d'une hauteur donnée de la zone d'étude ou du substrat. Il est ainsi possible d'analyser différentes hauteurs par exemple du canal microfluidique, mais aussi de réaliser un contraste interférentiel en laissant une partie du faisceau transmis en dessous du canal microfluidique. En réception, plusieurs récepteurs sont agencés en ligne, chacun recevant de préférence un faisceau émis par une source d'émission correspondante.

Selon un autre mode de réalisation, les projections des sources d'émission et des récepteurs sur un plan parallèle à la deuxième face et traversant la zone d'étude sont réparties autour de la zone d'étude. De préférence, les premiers moyens de réflexion sont alors constitués d'au moins un miroir entourant une partie de la zone d'étude, ont par exemple la forme d'au moins un arc de cercle centré sur la zone d'étude, et permetent de réfléchir les faisceaux acoustiques émis par toutes les sources d'émission. De même, les seconds moyens de réflexion sont de préférence constitués d'au moins un miroir entourant une partie de la zone d'étude, ayant par exemple la forme d'au moins un arc de cercle centré sur la zone d'étude, et permettant de réfléchir les faisceaux acoustiques vers tous les récepteurs. Un tel mode de réalisation permet d'étudier le faisceau transmis et/ou le faisceau réfléchi en fonction d'un angle par exemple entre le faisceau acoustique réfléchi par les premiers moyens de réflexion et la direction d'écoulement dans le canal microfluidique.

De préférence, les premiers et/ou seconds moyens de réflexion comprennent au moins un miroir courbe. De préférence, la forme ou courbure de l'au moins un miroir courbe ne varie pas le long d'un axe sensiblement perpendiculaire à la deuxième face. En effet, selon un mode de réalisation avantageux, plusieurs sources d'émission sont agencées de préférence en ligne, de façon à ce que le faisceau total acoustique réfléchi par les premiers moyens de réflexion soit élargi selon un axe sensiblement perpendiculaire à l'axe d'invariance d'au moins une lentille et/ou selon un axe sensiblement parallèle à l'axe d'invariance de l'au moins une lentille. Ainsi, il est possible de diriger d'autant plus d'énergie vers la zone d'étude. Il est alors avantageux de concentrer cette énergie, notamment grâce à l'action de focalisation de l'au moins une lentille. Cependant, l'opérateur est relativement limité pour concentrer cette énergie. En effet, l'au moins une lentille étant de préférence formée dans une paroi latérale d'un canal microfluidique, le rayon de courbure de ladite au moins une lentille est fixé par la largeur du canal microfluidique. Ceci conduit à un diamètre de pupille déterminé D. En utilisant de préférence des premiers et/ou seconds moyens de réflexion comprenant un miroir courbe, il est possible de cumuler l'action d'au moins un miroir courbe à l'action d'une lentille. L'au moins un miroir courbe permet de réduire le diamètre du faisceau acoustique incident sur une lentille pour adapter ce diamètre au diamètre de pupille D. L'au moins un miroir courbe est par exemple un miroir cylindrique, un miroir parabolique, ou de forme optimisée afin de minimiser les aberrations géométriques. Outre la concentration en énergie, un avantage supplémentaire de cet au moins un miroir courbe concerne plus particulièrement le mode de réalisation dans lequel différents faisceaux acoustiques traversent la zone d'étude à différentes hauteurs. La réalisation d'un réseau de N sources d'émission donne accès à des informations acoustiques sélectives en fonction de la hauteur z dans la zone d'étude. Cela conduit à une hauteur élémentaire pour chacune des sources d'émission égale à P/N, où P représente la hauteur maximale de la zone d'étude. La surface des sources d'émission se trouve alors de préférence fixée à D*P/N, surface qui peut conduire à des impédances électriques complètement différentes et généralement supérieures à l'impédance caractéristique (souvent 50 Ω). Il est donc particulièrement avantageux de pouvoir concentrer davantage d'énergie à chaque altitude z dans la zone d'étude. Alors qu'une lentille dont la forme ou courbure ne varie pas le long d'un axe sensiblement perpendiculaire à la deuxième face ne concentre l'énergie principalement que sur un axe parallèle à son axe d'invariance, l'au moins un miroir courbe permet de concentrer en outre l'énergie sur un axe perpendiculaire à son axe d'invariance. De préférence, on utilise deux miroirs courbes disposés en afocal de façon à obtenir un grandissement supérieur à un entre le faisceau acoustique issu de la source d'émission et le faisceau acoustique incident sur la lentille. La possibilité de réaliser l'au moins un miroir courbe est une conséquence directe de la direction de propagation du faisceau acoustique, après réflexion sur les premiers moyens de réflexion, sensiblement parallèle à la deuxième face. Ainsi, on peut concentrer plus d'énergie sur une surface plus réduite, à l'intérieur de la zone d'étude.

Selon un autre aspect de l'invention, il est proposé un procédé selon l'invention pour étudier une zone d'étude par onde acoustique, comprenant :
- une émission (1) d'un faisceau acoustique provenant d'une première face (7) d'un substrat en direction d'une deuxième face (6) de ce substrat, les première et deuxième faces étant distinctes,
- une première réflexion dudit faisceau acoustique par des premiers moyens de réflexion (11)
- une réception par un récepteur (10) du faisceau acoustique,
caractérisé en ce que
- ladite zone d'étude (3) est incluse dans le substrat (5),
- ladite première réflexion réfléchissant ledit faisceau provenant de la première face (7), de sorte que le faisceau possède, après réflexion, une direction de propagation sensiblement parallèle à la deuxième face (6) et traverse la zone d'étude (3), et en ce que le procédé comporte en outre
- une deuxième réflexion par des seconds moyens de réflexion, ladite deuxième réflexion réfléchissant le faisceau acoustique en direction de la première face (7) vers le récepteur (10) après que le faisceau ait traversé la zone d'étude (3).

Le procédé selon l'invention peut comprendre en outre un passage du faisceau acoustique à travers au moins une lentille, chaque lentille étant agencée pour être traversée par le faisceau acoustique entre les premiers moyens de réflexion et la zone d'étude et/ou entre la zone d'étude et les seconds moyens de réflexion.

Le procédé selon l'invention peut comprendre en outre une réception, par les seconds moyens de réflexion et par le récepteur, d'un faisceau acoustique diffracté dans la zone d'étude.

Le procédé selon l'invention peut comprendre plusieurs émissions de faisceaux acoustiques par plusieurs sources et plusieurs réceptions de faisceaux acoustiques par plusieurs récepteurs, chaque récepteur étant associé à une des sources d'émission et recevant un faisceau acoustique émis par la source d'émission à laquelle il est associé, puis réfléchi par les premiers moyens de réflexion, puis réfléchi par les seconds moyens de réflexion après avoir traversé la zone d'étude. De préférence, les différents faisceaux acoustiques émis par les différentes sources d'émission traversent la zone d'étude à différentes hauteurs.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre une vue en perspective d'un premier dispositif selon l'art antérieur,
- la figure 2 illustre une vue en perspective d'un deuxième dispositif selon l'art antérieur,
- la figure 3A illustre une vue en perspective d'un premier mode de réalisation du dispositif selon l'invention,
- la figure 3B illustre une vue de profil en coupe selon l'axe MN du premier mode de réalisation du dispositif selon l'invention ;
- la figure 4 illustre une vue de dessus d'un deuxième mode de réalisation du dispositif selon l'invention,
- la figure 5 illustre une vue en perspective d'un troisième mode de réalisation du dispositif selon l'invention,
- la figure 6 illustre une vue de dessus d'un quatrième mode de réalisation du dispositif selon l'invention,
- la figure 7 illustre une vue de profil en coupe selon le plan (Oxy) d'un cinquième mode de réalisation selon l'invention ;
- la figure 8 illustre une vue de dessus de premiers moyens de réflexion comprenant un miroir courbe.

La figure 1 illustre un premier dispositif selon l'art antérieur dans lequel une source d'émission 1 émet un faisceau acoustique représenté par la flèche 2 au travers d'un substrat 5 depuis la première face 7 de ce substrat vers la deuxième face 6 de ce substrat. Le faisceau acoustique traverse ensuite une zone d'étude 3 entourée en pointillés. La figure 1 représente en outre une lentille cylindrique 4 formé dans le substrat 5. Les plans de résolution maximale des dispositifs de gravures permettant notamment de former la lentille cylindrique 4 sont des plans parallèles à la deuxième face 6 du substrat 5. On voit donc sur la figure 1 que dans le premier mode de réalisation selon l'art antérieur, l'orientation de la lentille cylindrique 4 n'est pas optimale par rapport à ce plan et que celle-ci doit être formée par gravures successives dans des plans parallèles à la deuxième face 6. Ce premier dispositif selon l'art antérieur présente l'inconvénient majeur de ne pas laisser libre la deuxième face 6 puisqu'un récepteur 10 serait à placer au-dessus de la deuxième face 6, ce qui empêche d'effectuer des mesures et/ou observations de la zone d'étude 3 autres que celles réalisées grâce au faisceau acoustique. Dans ce cas, le substrat 5 est par exemple du niobate de lithium (LiNbO₃) ou de l'oxyde de Zinc (ZnO).

La figure 2 illustre un second dispositif selon l'art antérieur, dans lequel la source d'émission émet un faisceau acoustique représenté par la flèche 2 de la première face 7 en direction de la deuxième face 6. Des réseaux de traits 8 à profils triangulaires et de périodicité égale à la longueur d'onde de l'onde de surface sont agencés de part et d'autre de la zone d'étude 3. Après l'arrivée du faisceau acoustique sur le réseau de trait 8 situé du côté de la source d'émission 1, une onde de surface 9 se propage sur la deuxième face 6 du substrat 5 en traversant la zone d'étude 3. Une telle solution est non bio-compatible, et présente en outre un très mauvaise rendement énergétique, puisque seules des ondes de surfaces sont utilisées dans la zone d'étude, au lieu du faisceau acoustique principal. De plus, dans ce dispositif la hauteur du volume d'interaction est limitée à une longueur d'onde sous la face 6 du substrat 5.

Les figures 3 à 8 présentent différents modes de réalisation du dispositif selon l'invention mettant en oeuvre un procédé selon l'invention. Chacun de ces modes de réalisation comprend un substrat 5 muni d'une première face 7 et de la deuxième face 6, et une source d'émission 1 pour émettre un faisceau acoustique de la première face 7 en direction de la deuxième face 6. Le substrat est de la forme d'une lamelle dans laquelle la première face 7 est parallèle à la deuxième face 6. Le faisceau émis en direction de la deuxième face 6 a, avant d'atteindre des premiers moyens de réflexion 11, une direction de propagation perpendiculaire à la première face 7 et à la deuxième face 6. Le faisceau acoustique est représenté par les flèches 2. Les premiers moyens de réflexion 11 sont agencés pour réfléchir le faisceau acoustique provenant de la source d'émission 1 de sorte que le faisceau possède, après réflexion, une direction de propagation sensiblement parallèle à la deuxième face 6 et traverse la zone d'étude 3. Des seconds moyens de réflexion 12 sont agencés pour réfléchir le faisceau acoustique en direction de la première face 7 après que le faisceau ait traversé la zone d'étude 3. Le faisceau réfléchi par les seconds moyens de réflexion 12 a une direction de propagation perpendiculaire à la deuxième face 6 et à la première face 7. Un récepteur 10 est agencé pour recevoir le faisceau réfléchi par les seconds moyens de réflexion 12. Le substrat est en silicium. La source d'émission 1 est située sur la première face 7. Le récepteur 10 est situé sur la première face 7.

Notons que selon l'invention, une réflexion du faisceau acoustique ne change pas la nature de ce faisceau mais change sa direction. En particulier, le faisceau émis est une onde de volume, et reste une onde de volume après réflexion par les premiers ou les seconds moyens de réflexion 11, 12.

La source d'émission 1 est située sur la première face 7. Le récepteur 10 est lui aussi situé sur la première face 7.

La source d'émission 1 et le récepteur 10 comprennent des transducteurs piézoélectriques. La surface d'un transducteur piézoélectrique est par exemple de dix mille micromètres carré. Un transducteur piézoélectrique se présente souvent sous la forme d'une barrette, par exemple de surface principale sensiblement parallèle à la première face 7 de dimension cent micromètre fois cent micromètres, et de hauteur trois micromètres. La zone d'étude 3 comprend une partie d'un canal microfluidique 13 gravé le long de la deuxième face 6 et dans lequel passent des notamment des cellules biologiques 14, et de hauteur cent micromètres. La largeur *l* du canal microfluidique 13 est par exemple de cent micromètres, épaisseur des lentilles 4 non incluses.

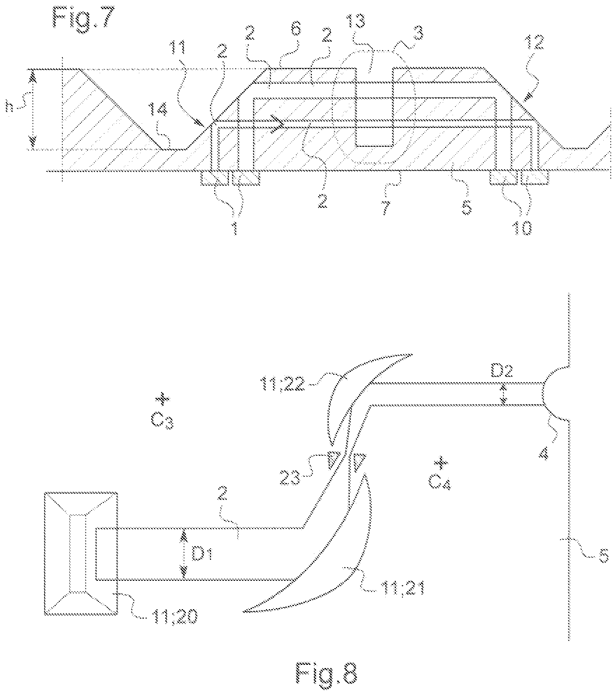

Chacun des moyens de réflexion 11 ou 12 représentés sur les figures comprennent une simple interface air/substrat gravés dans la deuxième face 6 du substrat 5. Chaque interface est formée par un creux. Le creux est dans ce cas sensiblement de la forme d'un prisme dont la base est sensiblement parallèle à la deuxième face 6 est comportant deux faces inclinées sensiblement à 45° par rapport à la deuxième face 6. L'une des faces forme un miroir incliné à 45° par rapport à la deuxième face 6. Le prisme a par exemple une longueur L qui vaut cent micromètres et une hauteur h qui vaut cent micromètres. On voit en particulier sur la figure 7 que l'arête formée par les deux faces du prisme inclinées à 45° par rapport à la deuxième face 6 ne se rejoignent pas forcément directement mais peuvent être reliées par une face 14 supplémentaire par exemple sensiblement parallèle à la deuxième face 6.

Pour une fréquence de l'ordre du Gigahertz dans un substrat de silicium, les longueurs d'ondes mises en jeu par le faisceau acoustique sont de l'ordre du micromètre, par exemple huit à neuf micromètres. A ces ordres de grandeurs, la surface des moyens de réflexions 11 et 12 ne nécessite pas un polissage très poussé contrairement aux besoins lorsque l'on travaille par exemple avec des faisceaux lumineux dans le visible.

Le récepteur 10 est relié à des moyens d'analyse qui exploitent le signal électrique généré par le récepteur en réponse au faisceau acoustique reçu, et calculent différentes informations à partir de ce signal. Par exemple, ces moyens d'analyse peuvent être agencés pour traiter l'amplitude et la phase du faisceau acoustique reçu par le récepteur, pour quantifier une vitesse de propagation du faisceau acoustique dans la zone d'étude et/ou une absorption du faisceau acoustique dans la zone d'étude, puis déterminer un coefficient de transmission ou de réflexion acoustique des objets (cellules biologiques) traversant la zone d'étude ou des propriétés élastiques de ces objets. Le traitement du faisceau acoustique reçu comprend typiquement une amplification et un filtrage en fréquence. Les moyens d'analyse comprennent typiquement un ordinateur équipé d'une carte d'acquisition du signal généré par le récepteur, ou un circuit analogique ou numérique dédié. Pour ces différentes étapes de traitement, quantification et détermination, on peut par exemple mettre en oeuvre des procédés ou algorithmes tels que décrits dans les références suivantes :
- C.F.Quate, A.Atalar and H.K.Wickramasinghe, Acoustic microscopy with mechanical scanning-A review, Proc.IEEE, vol 67, n°8, pp1092-1113, 1979
- B.Hadimioglu and CF.Quate, Water acoustic microscopy at suboptical wavelengths, Appl Phys Lett,vol43, pp 1006-1007, 1983

Les figures 3A et 3B représente un premier mode de réalisation dans lequel on travaille en transmission. Dans ce cas, les premiers et seconds moyens de réflexion 11 et 12 sont distincts, de même la source d'émission 1 et le récepteur 10 sont distincts. On voit en outre sur la figure 3A que ce mode de réalisation comprend deux seconds moyens de réflexion 12 : les uns alignés avec le faisceau émergeant sensiblement sans décalage angulaire des premiers moyens de réflexion 11 pour étudier la zone d'étude 3 en transmission, les autres alignés avec le faisceau diffracté représenté par la flèche 15 pour étudier la zone d'étude 3 en diffraction. Il y a donc dans le dispositif selon les figures 3A et 3B deux récepteurs 10, l'un pour recevoir le faisceau diffracté, l'autre pour recevoir le faisceau ayant traversé la zone d'étude 3 sensiblement sans décalage angulaire. Il est aussi possible d'imaginer un dispositif dans lequel on n'étudierait que le faisceau diffracté dans la zone d'étude 3, ou au contraire uniquement le faisceau transmis sensiblement sans décalage angulaire. On voit aussi sur la figure 3A que deux lentilles cylindriques 4 sont formées dans le substrat 5 sur le parcours du faisceau acoustique pour être traversées par le faisceau acoustique, une première lentille entre les premiers moyens de réflexion 11 et la zone d'étude 3, une seconde lentille entre la zone d'étude 3 et les seconds moyens de réflexion 12. Le rayon de courbure des lentilles cylindriques 4 est par exemple de cent micromètres, et leur hauteur est par exemple de cent micromètres. Les deux lentilles cylindriques 4 sont formées directement par une déformation d'une partie des parois latérales du canal microfluidique 13. Un tel dispositif est donc particulièrement compact : il présente peu d'interfaces et donc peu de pertes d'énergie. Chaque lentille cylindrique 4 a une forme de portion de cylindre dont l'axe de révolution est perpendiculaire à la première face 7 et à la deuxième face 6, cet axe de révolution étant un axe d'invariance le long duquel la forme et la courbure de cette lentille 4 ne varie pas.

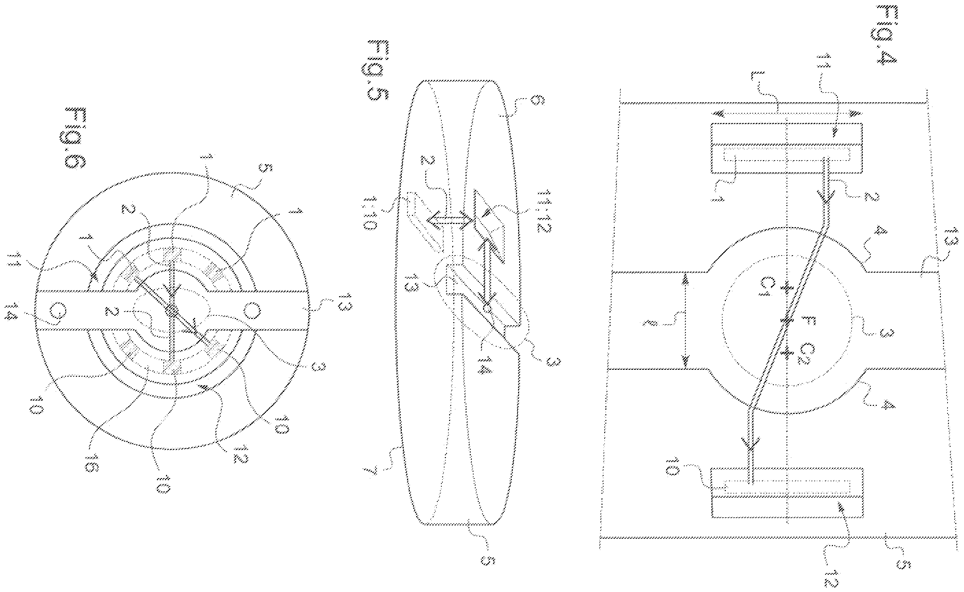

La figure 4 est une vue de dessus d'un deuxième mode de réalisation du dispositif selon l'invention qui ne sera décrit que pour ses différences par rapport au premier mode de réalisation des figures 3A et 3B, et dans lequel on n'étudie la zone d'étude 3 que grâce au faisceau transmis sensiblement sans décalage angulaire. Sur la figure 4, C₁ représente le centre de courbure de la première lentille cylindrique 4, C₂ représente le centre de courbure de la seconde lentille cylindrique 4. F représente le foyer commun des deux lentilles cylindriques 4. Les foyers des deux lentilles cylindriques 4 ne sont cependant pas forcement confondus, bien que le cas où les foyers sont confondus soit optimum. Dans le mode de réalisation selon la figure 4, il s'agit d'une réalisation en afocal : le faisceau acoustique émis par la source l'émission 1 est un faisceau parallèle, ce faisceau est ensuite focalisé à l'intérieur de la zone d'étude 3 par la première lentille cylindrique 4, puis il est à nouveau collimaté par le seconde lentille cylindrique 4 de façon à ce qu'un faisceau parallèle atteigne le récepteur 10. Cette configuration permet de focaliser l'énergie selon une barre sensiblement parallèle à l'axe des deux lentilles cylindriques 4, située à l'intérieur de la zone d'étude 3, par exemple mais non nécessairement, au milieu de la zone d'étude.

La figure 5 présente un troisième mode de réalisation de dispositif selon l'invention qui ne sera décrit que pour ses différences par rapport au premier mode de réalisation des figures 3A, 3B, et dans lequel on étudie la zone d'étude 3 en réflexion. Dans une variante non couverte par l'invention, les premiers moyens de réflexion 11 sont confondus avec les seconds moyens de réflexion 12. Le faisceau acoustique émis par la source d'émission 1 puis réfléchi par les premiers moyens de réflexion est réfléchi en direction des seconds moyens de réflexion par la zone d'étude 3, par exemple par une cellule 14 se trouvant dans cette zone 3. Dans une variante non représentée, le faisceau acoustique émis par la source d'émission 1 puis réfléchi par les premiers moyens de réflexion est réfléchi en direction des seconds moyens de réflexion par des troisièmes moyens de réflexion situés par exemple du côté de la zone d'étude 3 opposé aux premiers moyens de réflexion 11, et alignés de façon à renvoyer un faisceau acoustique vers les seconds moyens de réflexion 12. En outre, le récepteur 10 et la source d'émission 1 sont confondus.

Les figures 6 et 7 illustrent des modes de réalisation comprenant plusieurs sources d'émission 1 identiques à celle précédemment décrite, et plusieurs récepteurs 10 identiques à celui précédemment décrit. Chaque récepteur 10 est associé à une des sources d'émission 1 et est agencé pour recevoir un faisceau acoustique :
- émis en provenance de la première face 7 et en direction de la deuxième face 6 par la source d'émission 1 à laquelle ce récepteur est associé, puis
- réfléchi par les premiers moyens de réflexion 11 de sorte que le faisceau possède après réflexion une direction de propagation sensiblement parallèle à la deuxième face 6 et traverse la zone d'étude 3, puis
- réfléchi par les seconds moyens de réflexion 12 en direction de la première face 7 après avoir traversé la zone d'étude 3.

La figure 6 présente un quatrième mode de réalisation de dispositif selon l'invention qui ne sera décrit que pour ses différences par rapport au premier mode de réalisation des figures 3A, 3B, et permettant d'étudier la zone d'étude 3 en fonction de l'angle d'incidence du faisceau acoustique dans la zone d'étude 3. Les projections des plusieurs sources d'émission 1 et récepteurs 10 sur un plan parallèle à la deuxième face 6 et traversant la zone d'étude 3 sont réparties autour de la zone d'étude 3. Sur la figure 6, une zone 16 marquée par des pointillés définit la zone dans laquelle peuvent se trouver des sources d'émission 1 et des récepteurs 10. Les sources d'émission 1 et les récepteurs 10 sont couplés deux à deux par exemple pour une étude en transmission, de façon à ce qu'un récepteur 10 soit agencé pour recevoir un faisceau acoustique émis par une source d'émission 1 correspondante et réfléchi successivement par les premiers et seconds moyens de réflexion 11, 12 comme précédemment décrit. Dans ce mode de réalisation, les premiers moyens de réflexion 11 comprennent un miroir unique pour les différentes sources d'émission 1, et les seconds moyens de réflexion 12 comprennent un miroir unique pour les différents récepteurs 10. Bien sûr, le substrat 5 est coupé par le canal microfluidique 13, c'est pourquoi si les sources d'émission 1 sont réparties de part et d'autre du canal microfluidique 13, les premiers moyens de réflexion 11 sont répartis eux aussi de part et d'autre dudit canal 13, de même pour les seconds moyens de réflexion 12. Il est possible qu'une partie des sources d'émission 1 soit située d'une part du canal 13, tandis qu'une autre partie des sources d'émission 1 est située de l'autre part du canal 13. Les premiers et seconds moyens de réflexion 11 et 12 sont interchangeables, des moyens de réflexion étant agencés sur tout le pourtour libre du canal microfluidique ainsi que représenté à la figure 6.

Dans une variante de ce quatrième mode de réalisation, les premiers et seconds moyens de réflexion 11, 12 sont confondus, et chaque récepteur 10 est confondu avec la source d'émission 1 avec laquelle il est associé, de sorte que cette variante fonctionne en réflexion selon le principe décrit en référence à la figure 5.

La figure 7 présente un cinquième mode de réalisation de dispositif selon l'invention qui ne sera décrit que pour ses différences par rapport au premier mode de réalisation des figures 3A, 3B, et dans lequel plusieurs sources d'émission 1 et plusieurs récepteurs 10 sont alignés sur la première face 7 le long d'une droite passant par une projection de la zone d'étude sur la première face 7. Chaque source et chaque récepteur a une forme rectangulaire, l'axe parallèle aux plus grands côtés de ces rectangles étant parallèle à l'axe du prisme formé par les premiers moyens de réflexion 11. Ainsi, les sources d'émission 1 sont alignées de sortes que différentes faisceaux acoustiques émis par différentes sources d'émission 1 traversent la zone d'étude 3 à différentes hauteurs de cette zone d'étude, la hauteur étant définie le long d'un axe perpendiculaire à la première et à la deuxième face. Il est donc possible d'étudier la zone d'étude 3 sur différentes hauteurs. Sur la figure 7, les faisceaux acoustiques émis par les différentes sources d'émission 1 traversent le canal microfluidique 13. On voit sur la figure 7 que l'épaisseur des faisceaux varie sensiblement d'une source m'émission 1 à l'autre. Il s'agit dans ce cas principalement d'une façon de différencier facilement et visuellement les deux faisceaux. Cependant, toutes les sources d'émission 1 ne sont pas forcement identiques, et n'envoient pas nécessairement des faisceaux de largeurs identiques. Selon une variante non représentée, certaines des sources d'émission émettent un faisceau acoustique qui passe sous le canal microfluidique 13. On peut ainsi réaliser un contraste interférentiel en analysant à la fois les informations fournies par au moins un faisceau acoustique ayant traversé le canal microfluidique 13 et au moins un faisceau acoustique étant passé sous le canal microfluidique 13.

Dans une variante de ce cinquième mode de réalisation, les premiers et seconds moyens de réflexion 11, 12 sont confondus, et chaque récepteur 10 est confondu avec la source d'émission 1 avec laquelle il est associé, de sorte que cette variante fonctionne en réflexion selon le principe décrit en référence à la figure 5.

La figure 8 présente une vue de détail de dessus d'une variante d'un quelconque mode de réalisation de dispositif selon l'invention venant d'être décrit dans lequel les premiers moyens de réflexion 11 comprennent au moins un miroir courbe 21, 22. Dans le dispositif selon la figure 8, le faisceau acoustique représenté par la flèche 2 est réfléchi par un miroir sensiblement plan 20 incliné à 45° par rapport à la deuxième face 6 du substrat 5. Le faisceau acoustique possède après réflexion sur ce miroir sensiblement plan 20 une direction de propagation sensiblement parallèle à la deuxième face 6 du substrat. Deux miroirs courbes 21 et 22 sont agencés en afocal. Les deux miroirs courbes 21 et 22 sont par exemple cylindriques, paraboliques, ou de forme optimisée afin de minimiser les aberrations géométriques. La forme, notamment la courbure, de chaque miroir courbe 21, 22 ne varie pas le long d'un axe sensiblement perpendiculaire à la deuxième face. C₃ est le centre de courbure ou foyer de parabole du miroir 21. C₄ est le centre de courbure ou foyer de parabole du miroir 22. F₁₂ est le foyer commun des deux miroirs courbes 21 et 22. Des filtres spatiaux 23 sont situés sur le trajet du faisceau acoustique, sensiblement au niveau du foyer commun F₁₂ des miroirs courbes 21, 22, pour filtrer certaines aberrations géométriques du faisceau acoustique. Le faisceau acoustique incident sur le miroir courbe 21 a pour diamètre D₁ dans un plan sensiblement parallèle à la deuxième face 6, et une direction de propagation sensiblement parallèle à la deuxième face 6 du substrat. Le faisceau acoustique incident émergent de l'afocal formé par les miroirs courbes 21 et 22 a pour diamètre D₂ dans un plan sensiblement parallèle à la deuxième face 6, et une direction de propagation sensiblement parallèle à la deuxième face 6 du substrat, où D₂ est inférieur à D₁. On a donc un facteur de grandissement D₁/ D₂ supérieur à un sur le faisceau acoustique. On peut donc concentrer d'avantage d'énergie à l'intérieur de la zone d'étude 3 grâce à des premiers moyens de réflexion 11 comprenant un miroir courbe. De même, dans le cas où les seconds moyens de réflexion 12 comprenant au moins un miroir courbe 21, 22 selon le même agencement que celui venant d'être décrit pour les premiers moyens de réflexion 11, il est de la même façon possible d'agrandir simplement le diamètre du faisceau acoustique que reçoit le récepteur 10.

Dans une variante, le miroir 20 peut être un miroir courbe et peut remplacer ou compléter les miroirs 21, 22.

Comme décrit précédemment, le faisceau émis dans les modes de réalisation venant d'être décrit est une onde de volume, et reste une onde de volume après réflexion par les premiers ou les seconds moyens de réflexion 11, 12. D'une façon générale, il peut exister dans le substrat ou dans des milieux de propagation tels que le silicium, trois ondes de volume :
- une onde de compression dite onde longitudinale, et
- deux ondes de cisaillement dites ondes transversales.

Une incidence à 45° d'une onde longitudinale sur un miroir acoustique en contact avec l'air, ce qui conduit à une interface libre mécaniquement, permet de réfléchir typiquement de 10% à 20 % de l'amplitude incidente d'une onde longitudinale. Le reste se retrouve converti en onde de cisaillement.

Les ondes de cisaillement sont non directement utilisables dans le cas d'applications de type BioMEMS. La nécessité d'utiliser deux miroirs pour développer un système de mesure dans un canal micro fluidique impose dans le cas des BioMEMS de trouver une solution de façon à améliorer le coefficient de réflexion en onde longitudinale des miroirs et moyens de réflexion du dispositif selon l'invention.

Dans d'autres applications, il faudra au contraire améliorer le coefficient de réflexion en ondes transversales des miroirs et moyens de réflexion du dispositif selon l'invention.

Ainsi, dans une amélioration de l'un quelconque des modes de réalisation venant d'être décrit ou de l'une quelconque des variantes venant d'être décrite, pour au moins un composant parmi (de préférence pour chaque composant parmi) :
- les premiers moyens de réflexion 11,
- le miroir courbe 21,
- le miroir courbe 22,
- les seconds moyens de réflexion 22, et/ou
- les troisièmes moyens de réflexion,

la surface réfléchissante de ce composant agencée pour réfléchir l'onde acoustique comprend une (ou de préférence plusieurs) couche(s) complémentaire(s), chaque couche complémentaire comprenant un matériau judicieusement choisi pour améliorer considérablement le coefficient de réflexion pour l'onde longitudinale ou transversale selon l'application que l'on fait de cette onde. Plus précisément, les premiers et les seconds moyens de réflexion 11, 12 comprennent un miroir formé par une interface de matières avec le substrat, et le dispositif selon l'invention comprend au moins une couche complémentaire de matériau ou de préférence une superposition de plusieurs couches complémentaires de différents matériaux disposée sur le substrat, de sorte que les premiers et les seconds moyens de réflexion 11, 12 comprennent un miroir formé par une interface de matières entre le substrat et cette couche complémentaire ou cette superposition de couches complémentaires.

Pour chaque couche complémentaire, plusieurs candidats de matériaux sont possibles suivant les performances recherchées. On utilise de préférence :
- une couche complémentaire de métal comme de préférence du cuivre, du zinc, de l'étain, du titane, ou une combinaison de ces couches métalliques, et/ou
- une couche complémentaire de matériau diélectrique, comprenant de préférence du silicium, de préférence un oxyde de silicium tel du monoxyde de silicium SiO ou de la silice SiO₂, ou une combinaison de ces couches de matériaux diélectriques.

Chacune des couches complémentaires est déposée soit par évaporation sous vide ce qui est le procédé de dépôt préférentiel dans le cas d'une couche complémentaire métallique, soit par pulvérisation sous vide ce qui est le procédé de dépôt préférentiel dans le cas d'une couche complémentaire de matériau diélectrique.

L'épaisseur de chaque couche complémentaire est comprise de préférence entre 0,1 micromètre et 10 micromètres, de manière plus préférentielle entre 0,5 micromètres et 5 micromètres.

Dans la variante où la surface réfléchissante comprend plusieurs couches complémentaires, ces couches complémentaires sont superposées les unes sur les autres et sont des couches complémentaires de différents matériaux. En superposant plusieurs couches complémentaires de matériaux différents, on élargit la bande passante de la surface réfléchissante par rapport à la fréquence de l'onde acoustique réfléchie par cette surface.

Dans un exemple concret de réalisation, dans le cas :
- où le substrat 5 est en silicium pur, et où chacun des moyens de réflexion 11 et 12 comprend une simple interface air/substrat de silicium formée par un creux et gravée dans la deuxième face 6 du substrat 5,
- où chaque interface réfléchit une onde acoustique longitudinale ayant une fréquence dans une bande de 0,1 GHz à 3 GHz, typiquement de 1,6GHz avec une incidence à 45° sur l'interface,
alors chaque interface réfléchit typiquement de 10% à 20 % de l'amplitude incidente d'une onde longitudinale.

Dans une première variante, en déposant une couche complémentaire de silice SiO₂ de 4µm d'épaisseur, sur chacune des interfaces air/silicium des premiers et seconds moyens de réflexion, plus précisément sur l'extérieur du substrat 5 c'est-à-dire du côté de l'air, le coefficient de réflexion de chaque interface devient sensiblement égal à 80 % pour l'onde longitudinale dans une bande de 1,5 GHz à 1,7 GHz, avec une incidence à 45° sur l'interface.

Dans une deuxième variante, en déposant une couche complémentaire de silice SiO₂ de 3µm d'épaisseur sur chacune des interfaces air/silicium des premiers et seconds moyens de réflexion plus précisément sur l'extérieur du substrat 5 c'est-à-dire du côté de l'air, puis une couche complémentaire de titane de 0,5µm d'épaisseur sur chacune des couches complémentaires de silice, puis une couche complémentaire de cuivre de 3µm d'épaisseur sur chacune des couches complémentaires de titane, le coefficient de réflexion de chaque interface devient supérieur à 80 % pour l'onde longitudinale dans une bande de 1,56 GHz à 2,05 GHz, et avec une incidence à 45° sur l'interface. En multipliant les couches complémentaires de différents matériaux, on améliore ainsi la bande passante de chacun des moyens de réflexion.

## Revendications

1. Dispositif pour étudier une zone d'étude (3) par onde acoustique, comprenant :
- un substrat (5) muni d'une première face (7) et d'une deuxième face (6) distinctes,
- une zone d'étude (3),
- une source d'émission (1) agencée pour émettre un faisceau acoustique provenant de la première face (7) en direction de la deuxième face (6),
- des premiers moyens de réflexion (11) dudit faisceau acoustique
- un récepteur (10)
**caractérisé en ce que**,
- la zone d'étude (3) est incluse dans le substrat (5).
- les premiers moyens de réflexion (11) dudit faisceau acoustique sont agencés pour réfléchir ledit faisceau provenant de la première face, de sorte que le faisceau possède, après réflexion, une direction de propagation sensiblement parallèle à la deuxième face (6) et traverse la zone d'étude (3), et **en ce que** le dispositif comporte en outre
- des seconds moyens de réflexion (12) agencés pour réfléchir le faisceau acoustique en direction de la première face (7) après que le faisceau ait traversé la zone d'étude (3), et **en ce que**
- le récepteur (10) est agencé pour recevoir ledit faisceau acoustique réfléchi par les seconds moyens de réflexion (12),

2. Dispositif selon la revendication 1, **caractérisé en ce que** la source d'émission (1) est située sur la première face (7).

3. Dispositif selon la revendication 1 ou 2, **caractérisé en ce que** le récepteur (10) est situé sur la première face (7).

4. Dispositif selon l'une quelconque des revendications précédentes, **caractérisé en ce que** les premiers et/ou seconds moyens de réflexion (11 ; 12) comprennent un miroir formé par une interface de matières.

5. Dispositif selon la revendication 4, **caractérisé en ce que** les premiers et/ou seconds moyens de réflexion (11 ; 12) comprennent un miroir formé par une interface avec le substrat.

6. Dispositif selon la revendication 4 ou 5, **caractérisé en ce que** les premiers et/ou seconds moyens de réflexion (11 ; 12) comprennent un miroir formé par une interface air/substrat.

7. Dispositif selon la revendication 4 ou 5, **caractérisé en ce qu'**il comprend en outre au moins une couche complémentaire de matériau ou un ensemble de plusieurs couches complémentaires de différents matériaux superposées, cette couche ou ces couches étant disposée(s) sur le substrat, de sorte que les premiers et/ou les seconds moyens de réflexion comprennent un miroir formé par une interface de matières entre le substrat et cette couche complémentaire ou cet ensemble de plusieurs couches complémentaires.

8. Dispositif selon la revendication 7, **caractérisé en ce que** chaque couche complémentaire est sélectionnée parmi : une couche de métal comme de préférence du cuivre, du zinc, de l'étain, du titane, ou une couche de matériau diélectrique, comprenant de préférence du silicium, de préférence un oxyde de silicium tel du monoxyde de silicium SiO ou de la silice SiO₂.

9. Dispositif selon la revendication 7 ou 8, **caractérisé en ce que** l'épaisseur de chaque couche complémentaire est comprise de préférence entre 0,1 micromètre et 10 micromètres, de manière plus préférentielle entre 0,5 micromètres et 5 micromètres.

10. Dispositif selon l'une quelconque des revendications précédentes, **caractérisé en ce que** les premiers et/ou seconds moyens de réflexion (11 ; 12) comprennent un creux formé sur la deuxième face (6) du substrat.

11. Dispositif selon l'une quelconque des revendications précédentes, **caractérisés en ce que** les premiers et/ou seconds moyens de réflexion (11 ; 12) comprennent un miroir incliné à 45° par rapport à la deuxième face (6).

12. Dispositif selon l'une quelconque des revendications précédentes, **caractérisé en ce que** la source d'émission (1) et/ou le récepteur (10) comprennent des transducteurs piézoélectriques.

13. Dispositif selon l'une quelconque des revendications précédentes, **caractérisé en ce que** le substrat (5) est un substrat à base de silicium.

14. Dispositif selon l'une quelconque des revendications précédentes, **caractérisé en ce que** la zone d'étude (3) comprend une partie d'un canal microfluidique (13) situé sur la deuxième face (6).

15. Dispositif selon l'une quelconque des revendications précédentes, **caractérisé en ce qu'**il comprend au moins une lentille (4), chaque lentille (4) étant agencée pour être traversée par le faisceau acoustique entre les premiers moyens de réflexion (11) et la zone d'étude (3) et/ou entre la zone d'étude (3) et les seconds moyens de réflexion (12), de préférence formée dans le substrat (5).

16. Dispositif selon la revendication 15, **caractérisé en ce que** l'au moins une lentille (4) a une forme ou une courbure qui ne varie pas le long d'un axe sensiblement perpendiculaire à la deuxième face (6).

17. Dispositif selon la revendication 15 ou 16, dépendante de la revendication 9, **caractérisé en ce que** l'au moins une lentille (4) est formée dans une paroi du canal microfluidique (13).

18. Dispositif selon l'une quelconque des revendications précédentes, **caractérisé en ce que** la source d'émission (1) est distincte du récepteur (10), et **en ce que** les premiers moyens de réflexion (11) sont distincts des seconds moyens de réflexion (12).

19. Dispositif selon l'une quelconque des revendications 1 à 17, **caractérisé en ce que** les premiers et seconds moyens de réflexion (11 ;12) sont confondus.

20. Dispositif selon l'une quelconque des revendications précédentes, **caractérisé en ce que** les seconds moyens de réflexion (12) et le récepteur (10) sont agencés pour recevoir un faisceau diffracté dans la zone d'étude (3).

21. Dispositif selon l'une quelconque des revendications précédentes, caractérisé qu'il comprend plusieurs sources d'émission (1) et plusieurs récepteur (10), chaque récepteur (10) étant associé à une des sources d'émission (1) et étant agencé pour recevoir un faisceau acoustique émis par la source d'émission (1) à laquelle il est associé, puis réfléchi par les premiers moyens de réflexion (11), puis réfléchi par les seconds moyens de réflexion (12) après avoir traversé la zone d'étude (3).

22. Dispositif selon la revendication 21, **caractérisé en ce que** les sources d'émission (1) sont alignées de sorte que différents faisceaux acoustiques émis par les différentes sources d'émission (1) traversent la zone d'étude (3) à différentes hauteurs.

23. Dispositif selon la revendication 21, **caractérisé en ce que** les projections des sources d'émission (1) et des récepteurs (10) sur un plan parallèle à la deuxième face (6) et traversant la zone d'étude (3) sont réparties autour de la zone d'étude (3).

24. Dispositif selon l'une quelconque des revendications précédentes, **caractérisé en ce que** les premiers et/ou seconds moyens de réflexion (11 ; 12) comprennent un miroir courbe.

25. Procédé pour étudier une zone d'étude (3) par onde acoustique, comprenant :
- une émission (1) d'un faisceau acoustique provenant d'une première face (7) d'un substrat en direction d'une deuxième face (6) de ce substrat, les première et deuxième faces étant distinctes,
- une première réflexion dudit faisceau acoustique par des premiers moyens de réflexion (11)
- une réception par un récepteur (10) du faisceau acoustique,
**caractérisé en ce que**
- ladite zone d'étude (3) est incluse dans le substrat (5),
- ladite première réflexion réfléchissant ledit faisceau provenant de la première face (7), de sorte que le faisceau possède, après réflexion, une direction de propagation sensiblement parallèle à la deuxième face (6) et traverse la zone d'étude (3), et **en ce que** le procédé comporte en outre
- une deuxième réflexion par des seconds moyens de réflexion, ladite deuxième réflexion réfléchissant le faisceau acoustique en direction de la première face (7) vers le récepteur (10) après que le faisceau ait traversé la zone d'étude (3).

26. Procédé selon la revendication 25, **caractérisé en ce qu'**il comprend un passage du faisceau acoustique à travers au moins une lentille (4), chaque lentille (4) étant agencée pour être traversée par le faisceau acoustique entre les premiers moyens de réflexion (11) et la zone d'étude (3) et/ou entre la zone d'étude (3) et les seconds moyens de réflexion (12).

27. Procédé selon la revendication 25 ou 26, **caractérisé en ce qu'**il comprend une réception, par les seconds moyens de réflexion (12) et par le récepteur (10), d'un faisceau acoustique diffracté dans la zone d'étude (3).

28. Procédé selon l'une quelconque des revendications 25 à 27, caractérisé qu'il comprend plusieurs émissions de faisceaux acoustiques par plusieurs sources (1) et plusieurs réceptions de faisceaux acoustiques par plusieurs récepteurs (10), chaque récepteur (10) étant associé à une des sources d'émission (1) et recevant un faisceau acoustique émis par la source d'émission (1) à laquelle il est associé, puis réfléchi par les premiers moyens de réflexion (11), puis réfléchi par les seconds moyens de réflexion (12) après avoir traversé la zone d'étude (3).

29. Procédé selon la revendication 28, **caractérisé en ce que** les différents faisceaux acoustiques émis par les différentes sources d'émission (1) traversent la zone d'étude (3) à différentes hauteurs.

## Patentansprüche

1. Vorrichtung zum Untersuchen einer Untersuchungszone (3) mittels einer Schallwelle, welche aufweist:
- ein Substrat (5), welches mit einer ersten Fläche (7) und einer zweiten Fläche (6), die verschieden sind, versehen ist,
- eine Untersuchungszone (3),
- eine Sendequelle (1), die eingerichtet ist zum Senden eines Schall-Strahlenbündels ausgehend von der ersten Fläche (7) in Richtung der zweiten Fläche (6),
- erste Mittel zur Reflexion (11) des besagten Schall-Strahlenbündels,
- einen Empfänger (10),
**dadurch gekennzeichnet, dass**
- die Untersuchungszone (3) in dem Substrat (5) enthalten ist,
- die ersten Mittel zur Reflexion (11) des besagten Schall-Strahlenbündels eingerichtet sind, um das besagte Schall-Strahlenbündel, das von der ersten Fläche ausgeht, zu reflektieren, sodass das Strahlenbündel nach dem Reflektieren eine Ausbreitungsrichtung hat, die im Wesentlichen parallel zur zweiten Fläche (6) und quer zur Untersuchungszone (3) ist, und dadurch, dass
die Vorrichtung ferner aufweist
- zweite Mittel zur Reflexion (12), die eingerichtet sind zum Reflektieren des Schall-Strahlenbündels in Richtung der ersten Fläche (7), nachdem das Strahlenbündel die Untersuchungszone (3) durchlaufen hat, und dadurch, dass
- der Empfänger (10) eingerichtet ist zum Empfangen des besagten Schall-Strahlenbündels, das mittels der zweiten Mittel zur Reflexion (12) reflektiert wurde.

2. Vorrichtung gemäß Anspruch 1, **dadurch gekennzeichnet, dass** die Sendequelle (1) an der ersten Fläche (7) angeordnet ist.

3. Vorrichtung gemäß Anspruch 1 oder 2, **dadurch gekennzeichnet, dass** der Empfänger (10) an der ersten Fläche (7) angeordnet ist.

4. Vorrichtung gemäß irgendeinem der vorherigen Ansprüche, **dadurch gekennzeichnet, dass** die ersten und/oder die zweiten Mittel zur Reflexion (11; 12) einen Spiegel aufweisen, der mittels einer Grenzfläche von Materialien gebildet ist.

5. Vorrichtung gemäß Anspruch 4, **dadurch gekennzeichnet, dass** die ersten und/oder die zweiten Mittel zur Reflexion (11; 12) einen Spiegel aufweisen, der mittels einer Grenzfläche mit dem Substrat gebildet ist.

6. Vorrichtung gemäß Anspruch 4 oder 5, **dadurch gekennzeichnet, dass** die ersten und/oder die zweiten Mittel zur Reflexion (11; 12) einen Spiegel aufweisen, der mittels einer Luft/Substrat-Grenzfläche gebildet ist.

7. Vorrichtung gemäß Anspruch 4 oder 5, **dadurch gekennzeichnet, dass** sie unter anderem mindestens eine Material-Komplementärschicht oder eine Gesamtheit mehrerer Komplementärschichten verschiedener Materialien, die überlagert sind, aufweist, wobei diese Schicht oder diese Schichten an dem Substrat angeordnet ist/sind, sodass die ersten und/oder die zweiten Mittel zur Reflexion einen Spiegel aufweisen, der mittels einer Grenzfläche von Materialien zwischen dem Substrat und dieser Komplementärschicht oder dieser Gesamtheit mehrerer Komplementärschichten gebildet ist.

8. Vorrichtung gemäß Anspruch 7, **dadurch gekennzeichnet, dass** jede Komplementärschicht ausgewählt ist aus: einer Schicht aus Metall, wie vorzugsweise aus Kupfer, aus Zink, aus Zinn, aus Titan, oder einer Schicht aus dielektrischem Material, welches vorzugsweise Silizium, vorzugsweise ein Siliziumoxid wie Siliziummonoxid SiO oder Siliziumdioxid SiO₂, aufweist.

9. Vorrichtung gemäß Anspruch 7 oder 8, **dadurch gekennzeichnet, dass** die Dicke jeder Komplementärschicht vorzugsweise zwischen 0,1 Mikrometern und 10 Mikrometern liegt und noch bevorzugter zwischen 0,5 Mikrometern und 5 Mikrometern liegt.

10. Vorrichtung gemäß irgendeinem der vorherigen Ansprüche, **dadurch gekennzeichnet, dass** die ersten und/oder die zweiten Mittel zur Reflexion (11; 12) eine Vertiefung aufweisen, die an der zweiten Fläche (6) des Substrats gebildet ist.

11. Vorrichtung gemäß irgendeinem der vorherigen Ansprüche, **dadurch gekennzeichnet, dass** die ersten und/oder die zweiten Mittel zur Reflexion (11; 12) einen Spiegel aufweisen, der um 45° bezüglich der zweiten Fläche (6) geneigt ist.

12. Vorrichtung gemäß irgendeinem der vorherigen Ansprüche, **dadurch gekennzeichnet, dass** die Sendequelle (1) und/oder der Empfänger (10) piezoelektrische Wandler aufweisen.

13. Vorrichtung gemäß irgendeinem der vorherigen Ansprüche, **dadurch gekennzeichnet, dass** das Substrat (5) ein Substrat auf Basis von Silizium ist.

14. Vorrichtung gemäß irgendeinem der vorherigen Ansprüche, **dadurch gekennzeichnet, dass** die Untersuchungszone (3) einen Abschnitt eines Mikrofluid-Kanals (13) aufweist, der an der zweiten Fläche (6) angeordnet ist.

15. Vorrichtung gemäß irgendeinem der vorherigen Ansprüche, **dadurch gekennzeichnet, dass** sie mindestens eine, vorzugsweise in dem Substrat (5) gebildete Linse (4) aufweist, wobei jede Linse (4) eingerichtet ist, um von dem Schall-Strahlenbündel zwischen den ersten Mitteln zur Reflexion (11) und der Untersuchungszone (3) und/oder zwischen der Untersuchungszone (3) und den zweiten Mitteln zur Reflexion (12) durchlaufen zu werden.

16. Vorrichtung gemäß Anspruch 15, **dadurch gekennzeichnet, dass** die mindestens eine Linse (4) eine Form oder eine Krümmung hat, die sich entlang einer Achse, die im Wesentlichen senkrecht zu der zweiten Fläche (6) ist, nicht ändert.

17. Vorrichtung gemäß Anspruch 15 oder 16, der von Anspruch 9 abhängig ist, **dadurch gekennzeichnet, dass** die mindestens eine Linse (4) in einer Wand des Mikrofluid-Kanals (13) gebildet ist.

18. Vorrichtung gemäß irgendeinem der vorherigen Ansprüche, **dadurch gekennzeichnet, dass** die Sendequelle (1) verschieden ist von dem Empfänger (10), und dadurch, dass die ersten Mittel zur Reflexion (11) verschieden sind von den zweiten Mitteln zur Reflexion (12).

19. Vorrichtung gemäß irgendeinem der Ansprüche 1 bis 17, **dadurch gekennzeichnet, dass** die ersten und die zweiten Mittel zur Reflexion (11; 12) vertauscht sind.

20. Vorrichtung gemäß irgendeinem der vorherigen Ansprüche, **dadurch gekennzeichnet, dass** die zweiten Mittel zur Reflexion (12) und der Empfänger (10) eingerichtet sind zum Empfangen eines Strahlenbündels, das in der Untersuchungszone (13) gebeugt wird.

21. Vorrichtung gemäß irgendeinem der vorherigen Ansprüche, **dadurch gekennzeichnet, dass** sie mehrere Sendequellen (1) und mehrere Empfänger (10) aufweist, wobei jeder Empfänger (10) mit einer der Sendequellen (1) assoziiert ist und eingerichtet ist zum Empfangen eines Schall-Strahlenbündels, das von der Sendequelle (1) gesendet wird, mit der er assoziiert ist, dann mittels der ersten Mittel zur Reflexion (11) reflektiert wird, dann mittels der zweiten Mittel zur Reflexion (12) reflektiert wird, nachdem es die Untersuchungszone (3) durchlaufen hat.

22. Vorrichtung gemäß Anspruch 21, **dadurch gekennzeichnet, dass** die Sendequellen (1) angeordnet sind, sodass verschiedene Schall-Strahlenbündel, die von den verschiedenen Sendequellen (1) gesendet werden, die Untersuchungszone (3) bei verschiedenen Höhen durchlaufen.

23. Vorrichtung gemäß Anspruch 21, **dadurch gekennzeichnet, dass** die Projektionen der Sendequellen (1) und der Empfänger (10) auf einer Ebene, die parallel zur zweiten Fläche (6) ist und die Untersuchungszone (3) durchläuft, um die Untersuchungszone (3) herum verteilt sind.

24. Vorrichtung gemäß irgendeinem der vorherigen Ansprüche, **dadurch gekennzeichnet, dass** die ersten und/oder die zweiten Mittel zur Reflexion (11; 12) einen gekrümmten Spiegel aufweisen.

25. Verfahren zum Untersuchen einer Untersuchungszone (3) mittels einer Schallwelle, welches aufweist:
- ein Senden (1) eines Schall-Strahlenbündels ausgehend von einer ersten Fläche (7) eines Substrats in Richtung einer zweiten Fläche (6) dieses Substrats, wobei die erste und die zweite Fläche verschieden sind,
- ein erstes Reflektieren des besagten Schall-Strahlenbündels mittels erster Reflexionsmittel (11),
- ein Empfangen mittels eines Empfängers (10) des Schall-Strahlenbündels, **dadurch gekennzeichnet, dass**
- die besagte Untersuchungszone (3) in dem Substrat (5) enthalten ist,
- das besagte erste Reflektieren das besagte Strahlenbündel, das von der ersten Fläche (7) ausgeht, reflektiert, sodass das Strahlenbündel nach dem Reflektieren eine Ausbreitungsrichtung hat, die im Wesentlichen parallel zur zweiten Fläche (6) und quer zur Untersuchungszone (3) ist, und dadurch, dass das Verfahren unter anderem aufweist
- ein zweites Reflektieren mittels zweiter Reflexionsmittel, wobei das zweite Reflektieren das Schall-Strahlenbündel in Richtung der ersten Fläche (7) zu dem Empfänger (10) reflektiert, nachdem das Strahlenbündel die Untersuchungszone (3) durchlaufen hat.

26. Verfahren gemäß Anspruch 25, **dadurch gekennzeichnet, dass** es ein Durchlaufen des Schall-Strahlenbündels durch mindestens eine Linse (4) aufweist, wobei jede Linse (4) eingerichtet ist, um von dem Schall-Strahlenbündel zwischen den ersten Reflexionsmitteln (11) und der Untersuchungszone (3) und/oder zwischen der Untersuchungszone (3) und den zweiten Reflexionsmitteln (12) durchlaufen zu werden.

27. Verfahren gemäß Anspruch 25 oder 26, **dadurch gekennzeichnet, dass** es ein Empfangen eines Schall-Strahlenbündels, das in der Untersuchungszone (3) gebeugt wird, mittels der zweiten Reflexionsmittel (12) und mittels des Empfängers (10) aufweist.

28. Verfahren gemäß irgendeinem der Ansprüche 25 bis 27, **dadurch gekennzeichnet, dass** es mehrfaches Senden von Schall-Strahlenbündeln mittels mehrerer Quellen (1) und mehrfaches Empfangen von Schall-Strahlenbündeln mittels mehrerer Empfänger (10) aufweist, wobei jeder Empfänger (10) mit einer der Sendequellen (1) assoziiert ist und ein Schall-Strahlenbündel empfängt, das mittels der Sendequelle (1) gesendet wird, mit der er assoziiert ist, dann mittels der ersten Reflexionsmittel (11) reflektiert wird, dann mittels der zweiten Reflexionsmittel (12) reflektiert wird, nachdem es die Untersuchungszone (3) durchlaufen hat.

29. Verfahren gemäß Anspruch 28, **dadurch gekennzeichnet, dass** die verschiedenen Schall-Strahlenbündel, die von den verschiedenen Sendequellen (1) gesendet werden, die Untersuchungszone (3) bei verschiedenen Höhen durchlaufen.

## Claims

1. Device for studying a study area (3) using an acoustic wave, including:
- a substrate (5) equipped with a first face (7) and with a second face (6) that are separate,
- a study area (3),
- an emission source (1) arranged so as to emit an acoustic beam coming from the first face (7) in the direction of the second face (6),
- first means (11) for reflecting said acoustic beam,
- a receiver (10),
**characterized in that**
- the study area (3) is contained within the substrate (5),
- the first means (11) for reflecting said acoustic beam are arranged so as to reflect said beam coming from the first face such that the beam has, after reflection, a direction of propagation that is substantially parallel to the second face (6) and passes through the study area (3), and **in that** the device furthermore includes
- second reflection means (12) arranged so as to reflect the acoustic beam in the direction of the first face (7) after the beam has passed through the study area (3), and **in that**
- the receiver (10) is arranged so as to receive said acoustic beam reflected by the second reflection means (12).

2. Device according to Claim 1, **characterized in that** the emission source (1) is situated on the first face (7) .

3. Device according to Claim 1 or 2, **characterized in that** the receiver (10) is situated on the first face (7) .

4. Device according to any one of the preceding claims, **characterized in that** the first and/or second reflection means (11; 12) include a mirror formed by a material interface.

5. Device according to Claim 4, **characterized in that** the first and/or second reflection means (11; 12) include a mirror formed by an interface with the substrate.

6. Device according to Claim 4 or 5, **characterized in that** the first and/or second reflection means (11; 12) include a mirror formed by an air/substrate interface.

7. Device according to Claim 4 or 5, **characterized in that** it furthermore includes at least one additional layer of material or an assembly of a plurality of additional stacked layers of various materials, this layer or these layers being positioned on the substrate such that the first and/or the second reflection means include a mirror formed by a material interface between the substrate and this additional layer or this assembly of a plurality of additional layers.

8. Device according to Claim 7, **characterized in that** each additional layer is selected from among: a layer of metal, such as preferably copper, zinc, tin, titanium, or a layer of dielectric material, preferably including silicon, preferably a silicon oxide such as silicon monoxide SiO or silica SiO₂.

9. Device according to Claim 7 or 8, **characterized in that** the thickness of each additional layer is preferably between 0.1 micrometre and 10 micrometres, more preferably between 0.5 micrometres and 5 micrometres.

10. Device according to any one of the preceding claims, **characterized in that** the first and/or second reflection means (11; 12) include a cavity formed on the second face (6) of the substrate.

11. Device according to any one of the preceding claims, **characterized in that** the first and/or second reflection means (11; 12) include a mirror inclined at 45° with respect to the second face (6).

12. Device according to any one of the preceding claims, **characterized in that** the emission source (1) and/or the receiver (10) include piezoelectric transducers.

13. Device according to any one of the preceding claims, **characterized in that** the substrate (5) is a silicon-based substrate.

14. Device according to any one of the preceding claims, **characterized in that** the study area (3) includes part of a microfluidic channel (13) situated on the second face (6).

15. Device according to any one of the preceding claims, **characterized in that** it includes at least one lens (4), each lens (4) being arranged so as to be passed through by the acoustic beam between the first reflection means (11) and the study area (3) and/or between the study area (3) and the second reflection means (12), and preferably formed in the substrate (5).

16. Device according to Claim 15, **characterized in that** the at least one lens (4) has a shape or a curvature that does not vary along an axis that is substantially perpendicular to the second face (6).

17. Device according to Claim 15 or 16, dependent on Claim 9, **characterized in that** the at least one lens (4) is formed in a wall of the microfluidic channel (13) .

18. Device according to any one of the preceding claims, **characterized in that** the emission source (1) is separate from the receiver (10), and **in that** the first reflection means (11) are separate from the second reflection means (12).

19. Device according to any one of Claims 1 to 17, **characterized in that** the first and second reflection means (11; 12) are coincident.

20. Device according to any one of the preceding claims, **characterized in that** the second reflection means (12) and the receiver (10) are arranged so as to receive a beam diffracted in the study area (3).

21. Device according to any one of the preceding claims, **characterized in that** it includes a plurality of emission sources (1) and a plurality of receivers (10), each receiver (10) being associated with one of the emission sources (1) and being arranged so as to receive an acoustic beam emitted by the emission source (1) with which it is associated, and then reflected by the first reflection means (11), and then reflected by the second reflection means (12) after having passed through the study area (3).

22. Device according to Claim 21, **characterized in that** the emission sources (1) are aligned such that various acoustic beams emitted by the various emission sources (1) pass through the study area (3) at different heights.

23. Device according to Claim 21, **characterized in that** the projections of the emission sources (1) and of the receivers (10) onto a plane parallel to the second face (6) and passing through the study area (3) are distributed around the study area (3).

24. Device according to any one of the preceding claims, **characterized in that** the first and/or second reflection means (11; 12) include a curved mirror.

25. Method for studying a study area (3) using an acoustic wave, including:
- emission (1) of an acoustic beam coming from a first face (7) of a substrate in the direction of a second face (6) of this substrate, the first and second faces being separate,
- initial reflection of said acoustic beam by first reflection means (11),
- reception, by a receiver (10), of the acoustic beam,
**characterized in that**
- said study area (3) is contained within the substrate (5),
- said first reflection reflects said beam coming from the first face (7) such that the beam has, after reflection, a direction of propagation that is substantially parallel to the second face (6) and passes through the study area (3), and **in that** the method furthermore includes
- a second reflection by second reflection means, said second reflection reflecting the acoustic beam in the direction of the first face (7) to the receiver (10) after the beam has passed through the study area (3).

26. Method according to Claim 25, **characterized in that** it includes a passage of the acoustic beam through at least one lens (4), each lens (4) being arranged so as to be passed through by the acoustic beam between the first reflection means (11) and the study area (3) and/or between the study area (3) and the second reflection means (12).

27. Method according to Claim 25 or 26, **characterized in that** it includes reception, by the second reflection means (12) and by the receiver (10), of an acoustic beam diffracted in the study area (3).

28. Method according to any one of Claims 25 to 27, **characterized in that** it includes a plurality of emissions of acoustic beams by a plurality of sources (1) and a plurality of receptions of acoustic beams by a plurality of receivers (10), each receiver (10) being associated with one of the emission sources (1) and receiving an acoustic beam emitted by the emission source (1) with which it is associated, and then reflected by the first reflection means (11), and then reflected by the second reflection means (12) after having passed through the study area (3).

29. Method according to Claim 28, **characterized in that** the various acoustic beams emitted by the various emission sources (1) pass through the study area (3) at different heights.
